(19) Europäisches Patentamt / European Patent Office / Office européen des brevets

(11) **EP 3 699 212 B1**

(12) **EUROPEAN PATENT SPECIFICATION**

(45) Date of publication and mention
of the grant of the patent:
**02.10.2024   Bulletin 2024/40**

(21) Application number: **18851541.5**

(22) Date of filing: **24.08.2018**

(51) International Patent Classification (IPC):
**C08F 287/00** (2006.01)   **C08F 212/00** (2006.01)
**C08L 51/00** (2006.01)   **C08L 51/04** (2006.01)
**C08L 51/06** (2006.01)   C08F 212/08 (2006.01)
C08F 220/44 (2006.01)   C08F 255/04 (2006.01)
C08F 279/04 (2006.01)   C08L 55/02 (2006.01)
C08F 212/12 (2006.01)   C08L 25/16 (2006.01)
C08L 69/00 (2006.01)

(52) Cooperative Patent Classification (CPC):
(C-Sets available)
**C08F 212/12; C08F 255/04; C08F 279/04;
C08F 287/00; C08L 25/16; C08L 69/00;**
C08L 2203/30; C08L 2205/03; C08L 2205/035;
C08L 2207/04                              (Cont.)

(86) International application number:
**PCT/JP2018/031381**

(87) International publication number:
**WO 2019/044709 (07.03.2019 Gazette 2019/10)**

(54) **THERMOPLASTIC RESIN COMPOSITION AND MOULDED ARTICLE WITH REDUCED RATTLING NOISE**

THERMOPLASTISCHE HARZZUSAMMENSETZUNG UND FORMKÖRPER MIT REDUZIERTEM KLAPPERGERÄUSCH

COMPOSITION DE RÉSINE THERMOPLASTIQUE ET ARTICLE MOULÉ PRÉSENTANT UNE DIMINUTION DE BRUIT DE CLIQUETIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2017   JP 2017164766**

(43) Date of publication of application:
**26.08.2020   Bulletin 2020/35**

(73) Proprietor: **Techno-UMG Co., Ltd.
Tokyo 105-0021 (JP)**

(72) Inventors:
• **NOMURA, Hiroyuki
Tokyo 105-0021 (JP)**
• **TANAKA, Naruki
Tokyo 105-0021 (JP)**

(74) Representative: **Tegethoff, Sebastian et al
Fortmann Tegethoff Patent- und Rechtsanwälte
Oranienburger Straße 39
10117 Berlin (DE)**

(56) References cited:
WO-A1-2015/146743     WO-A1-2016/130631
WO-A1-2018/030398     JP-A- 2001 158 841
JP-A- 2002 037 974     JP-A- H05 331 246

(52) Cooperative Patent Classification (CPC): (Cont.)

C-Sets
**C08F 212/12, C08F 220/44, C08F 212/08;
C08F 255/04, C08F 212/08, C08F 220/44;
C08F 279/04, C08F 212/08, C08F 220/44;
C08F 287/00, C08F 212/08, C08F 220/44;
C08L 25/16, C08L 51/06, C08L 51/006;
C08L 25/16, C08L 51/06, C08L 55/02,
C08L 51/006;
C08L 69/00, C08L 25/12, C08L 51/006, C08L 51/06**

**Description**

Technical Field

The present invention relates to a thermoplastic resin composition which can provide a molded article that is not only highly rigid but also inhibited from generating hitting sound.

Background Art

Rubber-reinforced resins such as ABS resins are widely used as molding materials for vehicle parts such as automobile interior parts due to excellent mechanical properties, heat resistance, and moldability thereof.

When a vehicle part is molded with a resin, it is further demanded that not only mechanical strength is satisfied at a predetermined level or more, but also a noise generated from the part is decreased to improve quietness of the vehicle, considering comfortability in the vehicle cabin.

Conventionally, automobile interior parts have been molded with a rubber-reinforced resin using an ethylene-α-olefin rubbery polymer as a rubber component in order to prevent squeaking sound generated by the parts contacting together while maintaining mechanical strength at a predetermined level (Patent Literature 1). However, reduction of noise such as hitting sound referred to as a "rattle" remains unsolved.

On the other hand, an elastomeric block polymer is conventionally blended into a flame-retardant rubber-reinforced resin to provide a vibration damping property (Patent Literature 2-4), but it is only evaluated by a loss factor at a secondary resonance frequency at 25°C according to a cantilever resonance method, and reduction of noise such as hitting sound has not been studied at all.

Patent literature 5 relates to a sound insulator contains a flexible material (A) having a peak of the loss tangent (tan&dgr;) determined by dynamic viscoelasticity measurement in the temperature range of at least -60°C and less than 0°C, and a resin (B) having a peak of the loss tangent (tan&dgr;) determined by dynamic viscoelasticity measurement in the temperature range of 0-60°C inclusive, there being 1-50 parts by mass of the resin (B) for every 100 parts by mass of the flexible material (A). The sound insulator is a material that does not rely on a complex shape, and achieves superior sound insulating performance without an increase in weight.
Patent literature 6 discloses a rubber-reinforced thermoplastic resin (1), which is obtained by graft copolymerizing (II) monomer components, which comprise 5-100 % wt% of an aromatic vinyl compound (a) and 95-0 wt% of another monomer (b) that can be copolymerized with component (a), in the presence of a block copolymer comprising a polymer block (A) comprising mainly an aromatic vinyl compound and a polymer block (B), which comprises mainly isoprene or isoprene and butadiene, has a vinyl bond content of 40 % or more, has a tan δ main dispersion peak at 0°C or higher and has a number average molecular weight of 1,000-20,000; a thermoplastic resin composition comprising mainly 20-99 parts by weight of said resin (1) and 80-1 parts by weight of (2) another thermoplastic resin other than the component (1), which contains 1-100 wt% of a polyolefin-based resin; and a molded product of the composition, and indicates that said composition solves the problem of satisfying requirements relating to reduced vibration and reduced noise, and that the graft rate in the resin (1) is 20-90%. Patent literature 7 discloses This vehicle exterior material is obtained by compounding a rubber-reinforced styrene-based resin with a thermoplastic elastomer so as to adjust both the tan&delta; peak height and peak temperature in the viscoelastic properties of the final exterior material.

Patent literature 8 provides a thermoplastic resin composition that can provide molded articles that are not only highly rigid but that also generate less impact noise. [Solution] A thermoplastic resin composition that has a bending modulus of 1850 MPa or higher as measured in accordance with ISO 178 and that has a maximum sound pressure value of 2.0 Pa/N or lower over a range of 20-20,000 Hz as measured under the following conditions: A test piece that is an integrally molded article that is shaped to comprise a rectangular main body that is 120 mm long, 60 mm wide, and 3 mm thick and a trapezoidal protrusion that has a 40 mm lower base and a 20 mm upper base, is 8 mm tall and 1.5 mm thick, and is positioned upon an upper end of the main body is suspended by two strings that are taped to the protrusion, a sound pressure microphone that is arranged 12 cm from one surface of the test piece in the perpendicular direction is used to collect the sound generated when the center of said surface is struck by a stainless steel hammer with 2015 N of force, and measurements are taken on the basis of a sound pressure frequency spectrum found from the collected sound.
Patent literature 9 relates to a sound damping article is formed from a thermoplastic elastomer compound that includes styrenic block copolymer, high softening point tackifier, plasticizer, and secondary polymer. The styrenic block copolymer has a Copolymer Tan Delta Peak Temperature and the thermoplastic elastomer compound has a Compound Tan Delta Peak Temperature. The Compound Tan Delta Peak Temperature is greater than the Copolymer Tan elta Peak Temperature. The sound damping article exhibits useful vibration damping properties while also exhibiting beneficial sound and/or noise damping properties at or above room temperature

Citation List

Patent Literature

Patent Literature 1: Japanese Patent Laid-Open JP-A-2013112812
Patent Literature 2: Japanese Patent Laid-Open JP-A-2001158841
Patent Literature 3: Japanese Patent Laid-Open JP-AH345646
Patent Literature 4: Japanese Patent Laid-Open No. JP-H8-3249
Patent Literature 5: International Application Laid-Open WO 2015/146743 A
Patent Literature 6: Japanese Patent Laid-Open JP-A-H05 331246
Patent Literature 7: Japanese Patent Laid-Open JP-A-2002 037974
Patent Literature 8: International Application Laid-Open WO 2018/030398 A
Patent Literature 9: International Application Laid-Open WO 2016/130631 A

Summary of Invention

Technical Problem

The present inventors have found that when a resin is improved so as to exhibit rigidity at a predetermined level or more for the purpose of satisfying a mechanical strength required for a vehicle part or the like, hitting sound generated from the resultant resin molded article becomes noticeable.

Accordingly, it is an object of the present invention to provide a thermoplastic resin composition which can provide a molded article that is inhibited from generating hitting sound and is preferably highly rigid.

Solution to Problem

The present inventors have studied diligently in order to solve the above problem, and as a result found that a resin molded article can be inhibited from generating the hitting sound, and optionally can maintain the rigidity at a predetermined level, by blending a particular hitting sound-reducing material into a thermoplastic resin composition to lower the maximum sound pressure in a frequency spectrum of hitting sound of the resin molded article, leading to the completion of the present invention.

Thus, one aspect of the present invention provides a thermoplastic resin composition which comprises at least a rubber-reinforced resin (A) having a rubbery part (a1) and a resin part (a2),

the rubbery part (a1) comprising a rubbery part (a1-1) derived from a block copolymer composed of a block (I) having a structural unit derived from an aromatic vinyl compound, and a block (II) having a structural unit derived from isoprene or isoprene and butadiene and having a main dispersion peak of tan $\delta$ at 0°C or more, or a hydrogenated product thereof, and further comprising a rubbery part (a1-2) derived from an ethylene-$\alpha$-olefin rubbery polymer, the resin part (a2) comprising a structural unit derived from an aromatic vinyl compound, and the thermoplastic resin composition having a maximum value of sound pressure of 3.0 PaiN or less as measured in a frequency range of 20 to 20,000 Hz under the following conditions.

Measurement conditions:

Measurement is performed based on a frequency spectrum of sound pressure obtained by striking a center of one surface of a test piece with a force of 20 $\pm$ 5 N using a stainless steel hammer, and collecting a sound generated at this moment by use of a sound pressure microphone placed at a distance of 12 cm from the above surface in a perpendicular direction, the test piece being an integrally molded article having a rectangular main body having a length of 120 mm, a width of 60 mm, and a thickness of 3 mm and provided at an upper end thereof with a trapezoidal protrusion having an upper base of 20 mm, a lower base of 40 mm, a height of 8 mm, and a thickness of 1.5 mm, and being suspended by two strings taped to the protrusion.

Advantageous Effect of Invention

According to the present invention, it has been elucidated that the rigidity of a resin composition and the generation of squeaking sound are not necessarily linked to the generation of hitting sound. Thus, based on this finding, it has been made possible that when a particular hitting sound-reducing material is blended into a thermoplastic resin composition so that the maximum value of sound pressure of hitting sound of a resin molded article in the frequency range of 20 to 20,000 Hz is maintained at 3.0 PaiN or less, the harsh components of the hitting sound are made unnoticeable, and preferably, the rigidity of the resin molded article is maintained at a predetermined level or more. In the case of a thermoplastic resin composition to which the hitting sound-reducing material of the present invention is not added, a frequency spectrum of sound pressure obtained under the above measurement conditions shows two significant peaks at frequencies slightly exceeding 9,000 Hz and 19,000 Hz, respectively, and either one peak gives the maximum value of sound pressure. Here, it is considered that the peak around the above frequency of 19,000 Hz appears as a harmonic of the peak around the above frequency of 9,000 Hz. In contrast, in the case of a thermoplastic resin composition to which the hitting sound-reducing material of the present invention is added, it is considered that the two significant peaks in the frequency spectrum of sound pressure obtained under the above measurement conditions shift to the lower frequency side, and this contributes to making the harsh components of hitting sound unnoticeable. Therefore, in the present invention, the frequency giving the maximum value of sound pressure preferably resides within the range of 20 to 9,000 Hz or 14,000 to 19,000 Hz.

Brief Description of Drawing

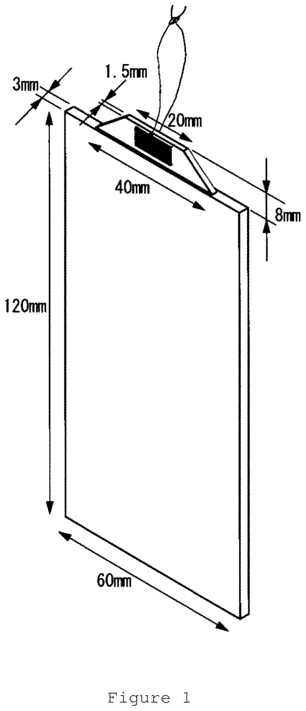

Figure 1 is a perspective view showing the test piece used for measurement of hitting sound in the present invention.

Description of Embodiments

The present invention will be described in detail below.

In the present invention, "(co)polymerization" means homopolymerization and/or copolymerization, "(meth)acrylic" means acrylic and/or methacrylic, and "(meth)acrylate" means acrylate and/or methacrylate.

A melting point (sometimes described herein as "Tm") measured according to JIS K 7121-1987 is a value obtained by measuring endothermic changes at a fixed temperature increase rate of 20°C per minute using a DSC (differential scanning calorimeter), and reading the peak temperature in the obtained endothermic pattern.

1. Thermoplastic resin composition (X) of the present invention

The thermoplastic resin composition (also referred to herein as a "component (X)") of the present invention should comprise the rubber-reinforced resin (A) comprising, as the rubbery part (a1), the rubbery part (a1-1) derived from the block copolymer comprising the above blocks (I) and (II) or the hydrogenated product thereof together with a rubbery part (a1-2) derived from an ethylene-$\alpha$-olefin rubbery polymer, and may be composed of only the rubber-reinforced resin (A) or may be composed of a mixture of the rubber-reinforced resin (A) and another thermoplastic resin (B).

Due to the rubbery part (a1-1) constituting the rubbery part (a1) of the thermoplastic resin composition (X) the effects of the present invention such as hitting sound reduction can be achieved.

Examples of another thermoplastic resin (B) that can be blended into the thermoplastic resin composition (X) of the present invention include polycarbonate resins, polyamide resins, polyester resins, vinyl chloride resins, silicone resins, and polylactic acid resins.

As the rubber-reinforced resin (A), especially preferred is one having a noise risk of 3 or less as measured using a stick-slip tester SSP-02 manufactured by ZINS Ziegler-Instruments GmbH under the following measurement conditions.

Measurement conditions:

A test piece having a length of 60 mm, a width of 100 mm, and a thickness of 4 mm, and a test piece having a length of 50 mm, a width of 25 mm, and a thickness of 4 mm are provided, and then a surface of the former test piece is rubbed against a surface of the latter test piece three times with a swing of 20 mm at a temperature of 23°C, a humidity of 50%RH, a load of 40 N, and a velocity of 10 mm/s.

The noise risk is an index in accordance with the German Automotive Industry Association (VDA) standards, and indicates, on a scale from 1 to 10, a stick-slip noise generation risk in the case where contact members are made of the same material, and the above noise level of 3 or less is regarded as acceptable.

When not only the rubber-reinforced resin (A) contained in the thermoplastic resin composition (X) of the present invention, but also the thermoplastic resin composition (X) of the present invention itself exhibits the above noise risk of 3 or less, not only the generation of hitting sound but also the generation of squeaking sound can be inhibited, and therefore a molded article of acoustically high quality can be provided.

In the thermoplastic resin composition (X) of the present invention, the rubber content is preferably 5 to 60% by mass when the whole of the thermoplastic resin composition (X) is 100% by mass from the viewpoint of mechanical properties such as impact resistance, and acoustic properties such as hitting sound and squeaking sound. When the thermoplastic resin composition (X) has crystallinity or contains a component having crystallinity, the effect of inhibiting the generation of squeaking sound is better, thereby leading to a preferred embodiment. Specifically, the thermoplastic resin composition (X) preferably has a melting point measured according to JIS K 7121-1987 in the range of 0 to 120°C, more preferably in the range of 10 to 90°C, and still more preferably in the range of 20 to 80°C. As described above, the melting point (Tm) is obtained according to JIS K 7121-1987, and the number of peaks in the endothermic pattern in the range of 0 to 120°C is not limited to one but may be two or more. The Tm (melting point) seen in the range of 0 to 120°C may be derived from the rubber-reinforced resin (A), particularly a rubbery part, or may be derived from an additive described below in connection with the rubber-reinforced resin (A), for example, a slidability-imparting agent such as a polyolefin wax having a low molecular weight such as a number average molecular weight of 10,000 or less. The slidability-imparting agent may be added to the rubber-reinforced resin (A) or directly added to the thermoplastic resin composition (X).

The thermoplastic resin composition (X) of the present invention preferably maintains high mechanical strength. Therefore, the thermoplastic resin composition (X) preferably has a deflection temperature under load (1.8 MPa) of 70°C or more, preferably has a Rockwell hardness of 98 or more, preferably has a tensile strength of 35 MPa or more, and preferably has a bending strength of 45 MPa or more.

1-1. Rubber-reinforced resin (A)

The rubber-reinforced resin (A) preferably has crystallinity in order to make better the function of inhibiting the generation of unpleasant sound such as squeaking sound from the above thermoplastic resin composition (X). Specifically, the above thermoplastic resin composition (X) has a melting point measured according to JIS K 7121-1987 preferably in the range of 0 to 120°C, more preferably in the range of 10 to 90°C, and still more preferably in the range of 20 to 80°C.

The rubber-reinforced resin (A) has a rubbery part (a1) derived from a rubbery polymer, and a resin part (a2) comprising a constituent unit derived from a vinyl monomer. The rubbery part (a1) preferably forms a graft copolymer having the resin part (a2) bonded by graft polymerization or the like. In other words, it is preferred that in the rubber-reinforced resin (A), at least part of the resin part (a2) is bonded to the rubbery part (a1) by graft polymerization or the like. Therefore, the rubber-reinforced resin is preferably composed of at least the above graft copolymer and the (co)polymer constituting the resin part (a2) that is not graft-polymerized onto the rubbery part (a1), and may further comprise the rubbery part (a1) onto which the resin part (a2) is not grafted, or other components such as additives.

1-2. Rubbery part (a1) of rubber-reinforced resin (A)

The above rubbery part (a1) may be a homopolymer or a copolymer as long as it is rubbery (has rubber elasticity) at 25°C. The above rubbery part (a1) needs to comprise at least the rubbery part (a1-1) derived from the block copolymer composed of the above block (I) and the above block (II) or the hydrogenated product thereof, and a rubbery part (a1-2) derived from the ethylene-$\alpha$-olefin rubbery polymer, and may additionally comprise a rubbery part (a1-2) derived from a non-diene polymer (hereinafter referred to as a "non-diene rubber"), and a rubbery part (a1-3) derived from a diene polymer (hereinafter referred to as a "diene rubber"). These polymers may be crosslinked polymers or non-crosslinked polymers. Among these, from the viewpoint of the improvement of mechanical strength such as impact resistance and rigidity, it is preferred in the present invention that at least part of the above rubbery part (a1) is composed of the rubbery part (a1-3) derived from the diene rubber. From viewpoint of the effect of inhibiting unpleasant sounds such as hitting sound and squeaking sound, that the above rubbery part (a1) is composed of the rubbery part (a1-1) derived from the block copolymer composed of the above block (I) and the above block (II) or the hydrogenated product thereof, and the rubbery part (a1-2) derived from the ethylene-$\alpha$-olefin rubbery polymer.

As the rubbery polymer constituting the rubbery part (a1-1), a block copolymer comprising the block (I) having a structural unit derived from an aromatic vinyl compound, and the block (II) having a structural unit derived from isoprene or isoprene and butadiene and having a main dispersion peak of tan $\delta$ at 0°C or more, or a hydrogenated product thereof is used.

Examples of the aromatic vinyl compound constituting the above block (I) include styrene, $\alpha$-methylstyrene, o-methylstyrene, p-methylstyrene, $\beta$-methylstyrene, ethylstyrene, p-tert-butylstyrene, vinyltoluene, vinylxylene, and vinylnaphthalene. These compounds can be used singly, or in combination of two or more. Among these, styrene and $\alpha$-methylstyrene are preferred.

The main dispersion peak of tan $\delta$ of the above block (II) needs to be at 0°C or more and is preferably at 5°C or more, more preferably at 10°C or more. The main dispersion peak of tan $\delta$ can be obtained by measuring at a frequency of 11 Hz, a measurement temperature of -110°C to +100°C, and a temperature increase rate of 2°C/min using a viscoelasticity measuring apparatus (manufactured by Toyo Baldwin Co., Ltd., DDV III EP). Content of 3,4-bond and 1,2-bond of the above block (II) is preferably 40% or more, more preferably 50% or more, and still more preferably 60 to 98%.

The number average molecular weight of the above block (I) is preferably 2500 to 40000, more preferably 3500 to 35000, and still more preferably 4000 to 30000. The number average molecular weight of the above block (II) is preferably 10000 to 200000, more preferably 20000 to 180000, and still more preferably 25000 to 150000. The number average molecular weight of the whole of the block copolymer is preferably 30000 to 300000, more preferably 40000 to 270000, and still more preferably 50000 to 250000.

In the present invention, from the viewpoint of the effect of inhibiting unpleasant sound such as hitting sound and squeaking sound, an ethylene-$\alpha$-olefin rubber is used as the rubber constituting the rubbery part (a1-2). The ethylene-$\alpha$-olefin rubber is a copolymer rubber comprising a structural unit derived from ethylene and a structural unit derived from an $\alpha$-olefin. Examples of the $\alpha$-olefin include propylene, 1-butene, 1-pentene, 1-hexene, 4-methyl-1-pentene, 1-heptene, 1-octene, 1-decene, 1-dodecene, 1-hexadecene, and 1-eicosene. These $\alpha$-olefins can be used singly, or in combination of two or more. The number of carbon atoms of the $\alpha$-olefin is preferably 3 to 20, more preferably 3 to 12, and further preferably 3 to 8 from the viewpoint of impact resistance. The ethylene:$\alpha$-olefin mass ratio in the ethylene-$\alpha$-olefin rubber is usually 5 to 95:95 to 5, preferably 50 to 95:50 to 5, and more preferably 60 to 95:40 to 5.

When the ethylene:$\alpha$-olefin mass ratio is in the above range, impact resistance of the obtained molded article is better, thereby resulting in a preferred embodiment. The ethylene-$\alpha$-olefin rubber may comprise a structural unit derived from a non-conjugated diene, as needed. Examples of the non-conjugated diene include alkenylnorbornenes, cyclic dienes, and aliphatic dienes, and are preferably 5-ethylidene-2-norbornene and dicyclopentadiene. These non-conjugated dienes can be used singly, or as a mixture of two or more. The proportion of the structural unit derived from the non-conjugated diene to the whole of the ethylene-$\alpha$-olefinrubber is usually 0 to 10% by mass, preferably 0 to 5% by mass, and more preferably 0 to 3% by mass.

In the present invention, as the ethylene-$\alpha$-olefin rubber, one having a melting point (Tm) of 0 to 120°C is preferably used. The Tm (melting point) of the ethylene-$\alpha$-olefin rubber is more preferably 10 to 90°C, still more preferably 20 to 80°C. The fact that the ethylene-$\alpha$-olefin rubber has a melting point (Tm) means that the rubber has crystallinity. Therefore, using the ethylene-$\alpha$-olefin rubber having such a melting point (Tm) can allow the above thermoplastic resin composition (X) to exhibit a melting point in the range of 0 to 120°C and make better the effect of inhibiting unpleasant sound such as hitting sound and squeaking sound. It is considered that when the rubber-reinforced resin (A) has such crystallinity, occurrence of the stick-slip phenomenon is inhibited, and therefore when a molded article thereof comes into dynamic contact with another article, the generation of unpleasant sound such as squeaking sound is inhibited. The stick-slip phenomenon is disclosed in Japanese Patent Laid-Open No. 2011-174029 and the like.

The Mooney viscosity (ML 1+4, 100°C; in accordance with JIS K 6300-1) of the ethylene-$\alpha$-olefin rubber is usually 5 to 80, preferably 10 to 65, and more preferably 10 to 45. When the Mooney viscosity is in the above range, moldability is excellent, and in addition impact strength and appearance of molded articles are better, thereby resulting in a preferred embodiment.

Among the ethylene-$\alpha$-olefin rubbers, from the viewpoint of the reduction of the generation of unpleasant sound such as hitting sound and squeaking sound, ethylene-$\alpha$-olefin copolymers containing no non-conjugated diene components are preferred. Among these, ethylene-propylene copolymers, ethylene-1-butene copolymers, and ethylene-1-octene copolymers are further preferred, and ethylene-propylene copolymers are particularly preferred.

Examples of the diene rubber constituting the rubbery part (a1-3) include homopolymers such as polybutadiene and polyisoprene; butadiene-based copolymers such as styrene-butadiene copolymers, styrene-butadiene-styrene copolymers, acrylonitrile-styrene-butadiene copolymers, and acrylonitrile-butadiene copolymers; and isoprene-based copolymers such as styrene-isoprene copolymers, styrene-isoprene-styrene copolymers, and acrylonitrile-styrene-isoprene copolymers. These may be random copolymers or block copolymers. These can be used singly, or in combination of two or more. The diene rubbery polymers may be crosslinked polymers or uncrosslinked polymers.

The rubbery part (a1) of the rubber-reinforced resin (A) preferably comprises the rubbery part (a1-3) derived from the diene rubber in addition to the above rubbery part (a1-2) derived from the ethylene-$\alpha$-olefinrubber from the viewpoint of mechanical strength such as rigidity. In this case, moldability and impact resistance of the thermoplastic resin composition (X), and appearance of the obtained molded article are more satisfactory.

In the present invention, the content of the rubbery part (a1) in the rubber-reinforced resin (A), that is, the rubber content, is preferably 3 to 80% by mass, more preferably 3 to 75% by mass, further preferably 4 to 70% by mass, further preferably 5 to 70% by mass, and particularly preferably 7 to 65% by mass based on 100% by mass of the whole of the rubber-reinforced resin (A). When the rubber content is in the above range, impact resistance, the effect of reducing unpleasant sound such as hitting sound and squeaking sound, dimensional stability, moldability, and the like of the thermoplastic resin composition (X) are better, thereby resulting in a preferred embodiment.

1-3. Resin part (a2) of rubber-reinforced resin (A)

The resin part (a2) of the rubber-reinforced resin (A) comprises a structural unit derived from a vinyl monomer, comprises an aromatic vinyl compound as an essential component, and may be composed of an aromatic vinyl compound and a compound copolymerizable with the aromatic vinyl compound. Specific examples of the above aromatic vinyl compound include styrene, $\alpha$-methylstyrene, o-methylstyrene, p-methylstyrene, $\beta$-methylstyrene, ethylstyrene, p-tert-butylstyrene, vinyltoluene, vinylxylene, and vinylnaphthalene. These compounds can be used singly, or in combination of two or more. Among these, styrene and $\alpha$-methylstyrene are preferred.

As the compound copolymerizable with the aromatic vinyl compound, at least one selected from a vinyl cyanide compound and a (meth)acrylate compound can be preferably used, and further, other vinyl monomers copolymerizable with these compounds can also be used as needed. Examples of such other vinyl monomers include maleimide compounds, unsaturated acid anhydrides, carboxyl group-containing unsaturated compounds, hydroxyl group-containing unsaturated compounds, oxazoline group-containing unsaturated compounds, and epoxy group-containing unsaturated compound. These can be used singly, or in combination of two or more.

Specific examples of the above vinyl cyanide compound include acrylonitrile, methacrylonitrile, ethacrylonitrile, $\alpha$-ethylacrylonitrile, and $\alpha$-isopropylacrylonitrile. These compounds can be used singly, or in combination of two or more. Among these, acrylonitrile is preferred.

Specific examples of the above (meth)acrylate compound include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, hexyl (meth)acrylate, n-octyl (meth)acrylate, 2-ethylhexyl (meth)acrylate, cyclohexyl (meth)acrylate, phenyl (meth)acrylate, and benzyl (meth)acrylate. These compounds can be used singly, or in combination of two or more. Among these, methyl methacrylate is preferred.

Specific examples of the above maleimide compounds include N-phenylmaleimide and N-cyclohexylmaleimide. These compounds can be used singly, or in combination of two or more.

Specific examples of the above unsaturated acid anhydrides include maleic anhydride, itaconic anhydride, and citraconic anhydride. These compounds can be used singly, or in combination of two or more.

Specific examples of the above carboxyl group-containing unsaturated compounds include (meth)acrylic acid, ethacrylic acid, maleic acid, fumaric acid, itaconic acid, crotonic acid, and cinnamic acid. These compounds can be used singly, or in combination of two or more.

Specific examples of the above hydroxyl group-containing unsaturated compounds include 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl (meth)acrylate, 2-hydroxypropyl (meth)acrylate, and 3-hydroxypropyl (meth)acrylate. These compounds can be used singly, or in combination of two or more.

The lower limit value of the content of the structural unit derived from the above aromatic vinyl compound in the rubber-reinforced resin (A) is preferably 40% by mass, more preferably 50% by mass, and further preferably 60% by mass when the total of the structural unit derived from the aromatic vinyl compound and the structural unit derived from the compound copolymerizable with the aromatic vinyl compound is 100% by mass. The upper limit value is usually 100% by mass.

When the resin part (a2) of the rubber-reinforced resin (A) comprises, as structural units, structural units derived from an aromatic vinyl compound and a vinyl cyanide compound, the content of the structural unit derived from the aromatic vinyl compound is usually 40 to 90% by mass, preferably 55 to 85% by mass, when the total of both is 100% by mass, and the content of the structural unit derived from the vinyl cyanide compound is 10 to 60% by mass, preferably 15 to 45% by mass, when the total of both is 100% by mass.

1-4. Method for producing rubber-reinforced resin (A)

The rubber-reinforced resin (A) can be produced, for example, by graft-polymerizing a vinyl monomer (b) comprising an aromatic vinyl compound in the presence of a variety of rubbery polymer (a) constituting the above rubbery part. The polymerization method in this production method is not particularly limited as long as the above graft copolymer is obtained, and may be a known method. The polymerization method can be emulsion polymerization, suspension polymerization, solution polymerization, bulk polymerization, or a polymerization method combining these. In these polymerization methods, a known polymerization initiator, chain transfer agent (molecular weight-adjusting agent), emulsifier, and the like can be appropriately used.

In the above production method, usually, a mixed product of a graft copolymer in which a (co)polymer of vinyl monomers is graft-polymerized onto a rubbery polymer and a (co)polymer of vinyl monomers not graft-polymerized onto the rubbery polymer is obtained. In some cases, the above mixed product may comprise a rubbery polymer onto which the (co)polymer is not graft-polymerized. The rubber-reinforced resin (A) comprises the rubbery part (a1) derived from a rubbery polymer, and the resin part (a2) having a constituent unit derived from a vinyl monomer, and the rubbery part (a1) preferably forms a graft copolymer having the resin part (a2) graft-polymerized therewith, and therefore a mixed product of a graft copolymer and a (co)polymer produced as described above can be used as the rubber-reinforced resin (A) as it is.

A (co)polymer (A') produced by polymerizing a vinyl monomer in the absence of the rubbery polymer (a) may be added to the rubber-reinforced resin (A). This (co)polymer (A') constitutes the resin part (a2) not graft-polymerized onto the rubbery part (a1), when added to the rubber-reinforced resin (A).

As described above, in the rubber-reinforced resin (A) used in the present invention, the rubbery part (a1) is be composed of the rubbery part (a1-1) derived from the block copolymer comprising the above block (I) and the above block (II) or the hydrogenated product thereof, and the rubbery part (a1-2) derived from the ethylene-α-olefin rubber and optionally the rubbery part (a1-3) derived from the diene rubber. Examples of the method for producing the rubber-reinforced resin (A) containing such a plurality of rubbers include a method in which a vinyl monomer (b) is graft-polymerized in the presence of a rubbery polymer (a) comprising a ethylene-α-olefin rubber and optionally a diene rubber in addition to the above block copolymer or hydrogenated product thereof. Examples of other production methods include a method in which a rubber-reinforced aromatic vinyl resin (A1) having a rubbery part (a1-1) derived from the above block copolymer or hydrogenated product thereof, and a resin part (a2) comprising a structural unit derived from an aromatic vinyl compound is mixed with a rubber-reinforced aromatic vinyl resin (A2) having a rubbery part (a1-2) derived from a ethylene-α-olefin rubbery polymer, and a resin part (a2) comprising a structural unit derived from an aromatic vinyl compound, and optionally a rubber-reinforced aromatic vinyl resin (A3) having a rubbery part (a1-3) derived from a diene rubbery polymer, and a resin part (a2) comprising a structural unit derived from an aromatic vinyl compound by a method such as melt-kneading.

The above rubber-reinforced aromatic vinyl resin (A1) can be produced by graft-polymerizing the vinyl monomer (b) comprising the aromatic vinyl compound in the presence of the above block copolymer or hydrogenated product thereof. The above rubber-reinforced aromatic vinyl resin (A2) can be produced by graft-polymerizing the vinyl monomer (b) comprising the aromatic vinyl compound in the presence of a ethylene-α-olefin rubber. The above rubber-reinforced aromatic vinyl resin (A3) can be produced by graft-polymerizing the vinyl monomer (b) comprising the aromatic vinyl compound in the presence of a diene rubber.

The graft ratio of the rubber-reinforced resin (A) is usually 10 to 150%, preferably 15 to 120%, more preferably 20 to 100%, and particularly preferably 20 to 80% in any case of the rubber-reinforced aromatic vinyl resins (A1) to (A3). When the graft ratio of the rubber-reinforced resin (A) is in the above range, impact resistance of the molded article of the present invention is better.

The graft ratio can be determined by the following equation (1).

$$\text{Graft ratio (\% by mass)} = ((S - T) / T) \times 100 \quad ...(1)$$

In the above equation, S is a mass (g) of an insoluble matter obtained by adding 1 g of the rubber-reinforced resin (A) to 20 ml of acetone, shaking the resultant for 2 hours by a shaker under the temperature condition of 25°C, and thereafter centrifugally separating the resultant for 60 min under the temperature condition of 5°C into the insoluble matter and a soluble matter by a centrifugal separator (rotation speed: 23,000 rpm); and T is a mass (g) of the rubbery part (a1) contained in 1 g of the rubber-reinforced resin (A). The mass of the rubbery part (a1) can be acquired by a method of a calculation from a polymerization prescription and a polymerization conversion, and in addition infrared spectroscopic analysis, pyrolysis gas chromatography, CHN elemental analysis, and the like.

The graft ratio can be regulated, for example, by suitably selecting kind and amount of a chain transfer agent, kind and amount of a polymerization initiator, addition method and addition time of monomers during polymerization, polymerization temperature and others employed in graft polymerization for producing the rubber-reinforced resin (A).

Limiting viscosity (in methyl ethyl ketone, 30°C) of the component soluble in acetone (hereinafter, referred as "acetone-soluble matter") of the rubber-reinforced resin (A) of the thermoplastic resin composition according to the present invention is usually 0.05 to 0.9 dl/g, preferably 0.07 to 0.8 dl/g, and more preferably 0.1 to 0.7 dl/g. When the limiting viscosity is within the above range, impact resistance and moldability of the resin composition become better.

Measurement of the limiting viscosity [η] can be carried out by the following method. First, the acetone-soluble matter of the rubber-reinforced resin (A) is dissolved in methyl ethyl ketone to make five solutions having different concentrations. From the results of reduced viscosities of the solutions of the respective concentrations measured at 30°C using an Ubbelohde viscometer, a limiting viscosity [η] is determined. The unit is dl/g.

The limiting viscosity [η] can be regulated, for example, by suitably selecting kind and amount of a chain transfer agent, kind and amount of a polymerization initiator, addition method and addition time of monomers during polymerization, polymerization temperature, polymerization time and others employed in graft polymerization of the rubber-reinforced resin (A). Alternatively, this regulation may be performed by blending a rubber-reinforced resin (A) with a (co)polymer (A') having a limiting viscosity [η] that is different from the limiting viscosity [η] of the acetone-soluble matter of the rubber-reinforced resin (A).

The rubber-reinforced resin (A) may comprise a slidability-imparting agent and other additives. The slidability-imparting agent not only provides slidability to the thermoplastic resin composition (X) to make easy the assembly of an article comprising the molded article of the present invention, but can provide the effect of inhibiting unpleasant sound such as squeaking sound from being generated from the article comprising the molded article of the present invention during use. Typical examples of the slidability-imparting agent include low molecular weight oxidized polyethylene (c1), ultrahigh molecular weight polyethylene (c2), and polytetrafluoroethylene (c3) as described in Japanese Patent Laid-Open No. 2011-137066, and besides low molecular weight (for example, a number average molecular weight of 10,000 or less) polyolefin waxes and silicone oils.

The above polyolefin wax is preferably a polyethylene wax having a melting point of 0 to 120°C, and the like. When a polyolefin wax having such a melting point or another additive having a melting point of 0 to 120°C is added to the rubber-reinforced resin (A), the effect of inhibiting occurrence of unpleasant sound such as squeaking sound can be obtained even if the rubbery part of the rubber-reinforced resin (A) has no melting point (Tm). These slidability-imparting agents can be used singly, or in combination of two or more. The amount to be added of these slidability-imparting agents is usually 0.1 to 10 parts by mass relative to 100 parts by mass of the rubber-reinforced resin (A).

Examples of the other additives include antioxidants, ultraviolet absorbents, weather-resistant agents, anti-aging agents, fillers, antistatic agents, flame retardants, antifogging agents, lubricants, antimicrobial agents, fungicides, tackifiers, plasticizers, colorants, graphite, carbon black, carbon nanotubes, and pigments (also including, for example, pigments provided with such functionality as an infrared absorbing or reflecting ability). These may be used singly, or in combination of two or more. The amount to be added of these additives is usually 0.1 to 30 parts by mass relative to 100 parts by mass of the rubber-reinforced resin (A).

The amount to be used of the rubber-reinforced aromatic vinyl resin (A1) that functions as a hitting sound-reducing material in the thermoplastic resin composition (X) of the present invention is preferably 0.1 to 40% by mass, more preferably 1 to 35% by mass, relative to 100% by mass of the whole of the thermoplastic resin composition (X). When the amount to be used of the rubber-reinforced aromatic vinyl resin (A1) is in the above range, the balance between the hitting sound reduction effect and mechanical strength of the molded article is good.

2. Method for producing the thermoplastic resin composition (X) of the present invention

The thermoplastic resin composition (X) according to the present invention can be produced by mixing the respective components in a predetermined blend ratio by a tumbler mixer, a Henschel mixer or the like, and thereafter melt-kneading the mixture using a kneading machine such as a single-screw extruder, a twin-screw extruder, a Banbury mixer, a kneader, a roll and a feeder ruder under proper conditions. A preferable kneading machine is a twin-screw extruder. Further, when the respective components are kneaded, they may be charged in whole so as to be kneaded, or may be charged stepwise or dividedly so as to be kneaded. Also, after kneading in a Banbury mixer, a kneader or the like, pelletization may be performed in an extruder. The melt-kneading temperature is usually 180 to 240°C, preferably 190 to 230°C.

3. Method for producing the molded article of the present invention

The molded article of the present invention can be produced by molding the thermoplastic resin composition (X) by a known molding method such as injection molding, press molding, sheet extrusion molding, vacuum molding, profile extrusion molding, foaming molding, a material extrusion deposition method, and powder sintering lamination molding.

The thermoplastic resin composition (X) of the present invention has excellent properties as described above, and therefore can be used as vehicle interior articles such as meter visors, console boxes, glove boxes, and cup holders; vehicle exterior articles such as front grilles, wheel caps, bumpers, fenders, spoilers, garnishes, door mirrors, radiator grilles, and knobs; lighting appliances such as straight tube type LED lamps, bulb type LED lamps, and bulb type fluorescent lamps; home electric appliances such as cellular phones, tablet terminals, rice cookers, refrigerators, microwave ovens, gas stoves, vacuum cleaners, dishwashers, air cleaners, air conditioners, heaters, TVs, and recorders; office automation equipment such as printers, faxes, copying machines, personal computers, and projectors; acoustic equipment such as audio appliances, organs, and electronic pianos; caps for cosmetic containers; battery cell housings; and the like, and can be particularly preferably used as vehicle interior articles.

The molded article of the present invention can be used as components of an article comprising at least two components that come into contact with each other, and having a risk that both components come into contact with each other to generate hitting sound. The present invention can provide, for example, an article comprising at least two components that come into contact with each other, wherein at least part of a portion of one component that comes into contact with at least the other of the two components is formed of the above thermoplastic resin composition (X). In other words, the present invention can provide an article comprising at least a first component and a second component that come into contact with each other, wherein in the first component, at least part of a portion that comes into contact with the second component (particularly an end surface of the first component) is formed of the above thermoplastic resin composition (X). In this case, it is preferred that in the first component, the whole thereof or part or all of a portion that comes into contact with the second component (particularly an end surface of the first component) is formed of the thermoplastic resin composition (X). The above article should be one in which the first and second components come into contact with each other as described above, and can be particularly preferably used for an article in which both components come into contact with each other via uneven portions by snap-fit, threaded engagement, or the like, or an article in which both components are adjacent to each other with a gap but intermittently come into contact with each other by vibration or the like. The second component with which the first component comes into contact may be a component molded of the thermoplastic resin composition (X), and may be a component molded of a resin other than the thermoplastic resin composition (X), or a component made of another material such as a metal. Examples of the resin other than the thermoplastic resin composition (X) include polypropylene resins, rubber-reinforced aromatic vinyl resins such as ABS resins, acrylic resins such as polymethyl methacrylate, polycarbonate resins, polycarbonate/ABS alloys, nylon resins, nylon/ABS alloys, PET resins, PET/ABS alloys, PBT/ABS alloys, thermoplastic elastomers, and thermosetting elastomers.

Examples

The present invention will be more specifically described below by way of Examples, but the present invention is not limited to only the following Examples. In the Examples, parts and % are based on mass unless otherwise noted.

1. Raw Materials [P]

As a rubber-reinforced aromatic vinyl resins (A1) used as a hitting sound-reducing material, a raw material P1 obtained in the following Synthesis Example 1-1 was used.

1-1. Synthesis Example 1-1 (Synthesis of Raw Material P1 (hitting sound-reducing material))

As an elastomer, a styrene-isoprene-styrene (SIS) block copolymer "HYBRAR 5127" (trade name, manufactured by KURARAY CO., LTD., styrene content: 20%, glass transition temperature (Tg): 8°C, peak temperature of main dispersion of tan $\delta$: 25°C, 3,4-bond and 1,2-bond content: 95%) was provided.
A 10L-internal volume stainless steel autoclave equipped with a ribbon stirrer blade was charged with 30 parts of the above elastomer, 51 parts of styrene, 19 parts of acrylonitrile, 120 parts of toluene, and 0.1 part of tert-dodecyl mercaptan that were previously formed into a uniform solution, and the temperature was increased with stirring. At 50°C, 0.5 part of benzoyl peroxide and 0.1 part of dicumyl peroxide were added, and the temperature was further increased. After 80°C was reached, polymerization reaction was performed at a stirring rotation rate of 200 rpm while the temperature was controlled to be constant at 80°C. After the completion of the reaction, 0.2 part of 2,2-methylene-bis-4-methyl-6-t-butylphenol was added. Then, the reaction mixture was taken out of the autoclave, and unreacted matters and solvents were removed therefrom by steam distillation followed by fine grinding. Then, the rubber-reinforced aromatic vinyl resin (A1) was pelletized by an extruder (220°C, 700 mmHg vacuum) equipped with a 40 mm-screw and a vent while volatile components were substantially removed. The graft ratio of the present rubber-reinforced aromatic vinyl resin (A1) was 55%, and the limiting viscosity [$\eta$] of the acetone-soluble matter thereof was 0.45 dl/g.

2. Raw Materials [Q]

As rubber-reinforced aromatic vinyl resins (A2) and (A3), the raw materials Q1 and Q2 of the following Synthesis Examples 2-1 and 2-2 were used.

2-1. Synthesis Example 2-1 (Synthesis of Raw Material Q1 (ethylene-propylene (EP) rubber-reinforced aromatic vinyl resin))

A 20L-volume stainless steel autoclave equipped with a ribbon stirrer blade, an auxiliary agent-continuous adding device, a thermometer and the like was charged with 22 parts of an ethylene-propylene copolymer (ethylene/propylene = 78/22 (%), Mooney viscosity (ML 1+4, 100°C) = 20, melting point (Tm) = 40°C, glass transition temperature (Tg) = -50°C) as an ethylene-$\alpha$-olefin rubbery polymer, 55 parts of styrene, 23 parts of acrylonitrile, 0.5 part of t-dodecyl mercaptan, and 110 parts of toluene, and the internal temperature was increased to 75°C, followed by stirring the contents in the autoclave for 1 hour to obtain a uniform solution. Then, 0.45 part of t-butylperoxyisopropyl monocarbonate was added, and the internal temperature was further increased. After 100°C was reached, polymerization reaction was performed at a stirring rotation rate of 100 rpm while this temperature was maintained. Four hours after the start of the polymerization reaction, the internal temperature was increased to 120°C, and while this temperature was maintained, the reaction was further performed for 2 hours before the polymerization reaction was terminated. Then, the internal temperature was cooled to 100°C, and 0.2 part of octadecyl-3-(3,5-di-t-butyl-4-hydroxyphenol)-propionate and 0.02 part of dimethyl silicone oil "KF-96-100cSt" (trade name: manufactured by Shin-Etsu Chemical Co., Ltd.) were added. Then, the reaction mixture was taken out of the autoclave, and unreacted matters and solvents were removed therefrom by steam distillation. Further, the resultant was pelletized using an extruder (at a cylinder temperature of 220°C, degree of vacuum of 760 mmHg) equipped with a 40 mm$\phi$-screw and a vent while volatile components were substantially degassed. The graft ratio of the obtained ethylene-$\alpha$-olefin rubber-reinforced aromatic vinyl resin (A2) was 47%, and the limiting viscosity [$\eta$] of the acetone-soluble matter thereof was 0.47 dl/g.

2-2. Synthesis Example 2-2 (Synthesis of Raw Material Q2 (diene rubber-reinforced aromatic vinyl resin))

A polymerization container equipped with a stirrer was charged with 280 parts of water, 60 parts (solid content) of a polybutadiene latex having a weight average particle diameter of 0.26 $\mu$m and a gel fraction of 90%, as a diene rubbery polymer, 0.3 part of sodium formaldehyde sulfoxylate, 0.0025 part of ferrous sulfate, and 0.01 part of disodium ethylenediaminetetraacetate, and was deoxidized and then heated to 60°C under a nitrogen gas stream with stirring. Then, a monomer mixture comprising 10 parts of acrylonitrile, 30 parts of styrene, 0.2 part of t-dodecyl mercaptan, and 0.3 part of cumene hydroperoxide was continuously added thereto dropwise at 60°C over 5 hours. After the completion of the dropwise addition, stirring was continued at a polymerization temperature of 65°C for 1 hour, and then polymerization was terminated to obtain a latex of a graft copolymer. Polymerization conversion rate was 98%. Then, 0.2 part of 2,2'-methylene-bis(4-ethylene-6-t-butylphenol) was added to the obtained latex, and calcium chloride was added thereto for coagulation followed by washing, filtration, and drying steps to obtain a powdery resin composition. The graft ratio of the obtained rubber-reinforced aromatic vinyl resin (A3) was 40%, and the limiting viscosity [$\eta$] of the acetone-soluble matter thereof was 0.38 dl/g.

3. Raw Materials [R]

As thermoplastic resins that did not contain any part derived from the rubbery polymer, the following raw materials R1 and R2 were used.

3-1. Raw Material R1 (AS resin)

An acrylonitrile-styrene copolymer which had proportions of acrylonitrile units and styrene units of 27% and 73%, respectively, and had a limiting viscosity [$\eta$] (at 30°C in methyl ethyl ketone) of 0.47 dl/g was used. Glass transition temperature (Tg) was 103°C.

3-2. Synthesis Example 3 (Synthesis of Raw Material R2 (heat-resistant AS resin))

A polymerization container with a stirrer was charged with 250 parts of water and 1.0 part of sodium palmitate, and was deoxidized and then heated to 70°C under a nitrogen gas stream with stirring. Further, 0.4 part of sodium formaldehyde sulfoxylate, 0.0025 part of ferrous sulfate, and 0.01 part of disodium ethylenediaminetetraacetate were fed thereinto, and then a monomer mixture comprising 70 parts of $\alpha$-methylstyrene, 25 parts of acrylonitrile, 5 parts of styrene, 0.5 part of t-dodecyl mercaptan, and 0.2 part of cumene hydroperoxide was continuously added thereto dropwise at a polymerization temperature of 70°C over 7 hours. After the completion of the dropwise addition, stirring was continued for 1 hour at a polymerization temperature of 75°C, and then polymerization was terminated to obtain a latex of a copolymer. Polymerization conversion rate was 99%. Then, the obtained latex was coagulated by adding calcium chloride, followed by washing, filtration, and drying steps to obtain a powdery copolymer. The limiting viscosity [$\eta$] of the acetone-soluble matter of the obtained copolymer was 0.40 dl/g.

4. Raw Material [S]

4-1. Raw Material S1 (PC resin)

A polycarbonate resin "NOVAREX 7022J" (trade name) manufactured by Mitsubishi Engineering-Plastics Corporation was used.

Examples 1 to 6 and Comparative Examples 1 to 4

1. Production of thermoplastic resin composition

The raw materials [P], [Q], [R], and [S] shown in Table 1 were mixed in a blending proportion shown in the same table. And then, the resultant mixture was melt-kneaded at 250°C using a twin-screw extruder (a model name "TEX44", The Japan Steel Works, LTD.) to obtain pellets. The obtained resin composition was subjected to the following measurement and evaluation. The results are shown in the following Table 1. In Examples 1 to 3 and Comparative Examples 1 to 2, as auxiliary agents, 0.1 part of ADK STAB AO-20 (manufactured by ADEKA CORPORATION, 1,3,5-tris(3,5-di-tert-butyl-4-hydroxybenzyl)-1,3,5-triazine-2,4,6(1H,3H,5H)-trione) and 0.2 part of ADK STAB PEP-24G (manufactured by ADEKA CORPORATION, bis(2,4-di-tert-butylphenyl)pentaerythritol-diphosphite) were blended, and in Examples 4 to 6 and Comparative Examples 3 to 4, as an auxiliary agent, 0.2 part of ADK STAB 2112 (manufactured by ADEKA CORPORATION, tris(2,4-di-tert-butylphenyl) phosphite) was blended.

2. Melting point (Tm)

According to JIS K7121-1987, endothermic changes were measured at a fixed temperature increase rate of 20°C per minute using a DSC (differential scanning calorimeter), and the melting point (Tm) was obtained from the peak temperature in the obtained endothermic pattern.

3. Bending modulus (rigidity)

Measurement was performed according to ISO 178.

4. Deflection temperature under load

Measurement was performed under a load condition of 1.8 MPa according to ISO 75.

5. Rockwell hardness

Measurement was performed according to ISO 2039.

6. Tensile strength

Measurement was performed according to ISO 527.

7. Bending strength

Measurement was performed according to ISO 178.

8. Measurement of sound pressure of hitting sound

A test piece, which was an integrally molded article having a shape with a trapezoidal protrusion having an upper base of 20 mm, a lower base of 40 mm, a height of 8 mm, and a thickness of 1.5 mm at the upper end of a rectangular main body having a length of 120 mm, a width of 60 mm, and a thickness of 3 mm as shown in Figure 1, was injection-molded by an injection molding machine IS-170FA manufactured by TOSHIBA MACHINE CO., LTD at a cylinder temperature of 250°C, an injection pressure of 50 MPa, and a mold temperature of 60°C using each thermoplastic resin composition. Then, in a state in which the test piece was suspended by two strings taped to the protrusion of the test piece, the center of one surface of the test piece was struck with a force of 20 ± 5 N using a stainless steel hammer "086C03" (trade name) manufactured by PCB Piezotronics, Inc. capable of measuring a striking force, and the sound generated at this moment was collected by use of a sound pressure microphone "378B02" (trade name) manufactured by PCB Piezotronics, Inc. placed at a distance of 12 cm perpendicularly from the above surface, and converted into a frequency spectrum of sound pressure by a Fourier transform analyzer "Multi JOB FFT Analyzer OR34J-4" (trade name) manufactured by OROS. The maximum value of sound pressure (PaiN) and its frequency (Hz) in the obtained frequency spectrum were used as measured values. The measurement was performed in a room at a room temperature of 23°C. The sound pressure (Pa/N) obtained as a measured value means the sound pressure per 1 N of the measured striking force.

9. Attenuation of hitting sound

The same operation as the measurement of sound pressure of hitting sound was performed, and temporal changes in sound pressure were measured by a Fourier transform analyzer "Multi JOB FFT Analyzer OR34J-4" (trade name) manufactured by OROS. The time required from the generation of a sound until the sound pressure decreased to 1/4 of the maximum sound pressure was used as hitting sound attenuation time. The attenuation of the hitting sound is preferably shorter than 0.01 seconds, more preferably shorter than 0.008 seconds.

10. Squeaking sound evaluation (noise risk)

Each thermoplastic resin composition was injection-molded by an injection molding machine "IS-170FA" manufactured by TOSHIBA MACHINE CO., LTD. at a cylinder temperature of 250°C, an injection pressure of 50 MPa, and a mold temperature of 60°C to obtain an injection molded plate having a length of 150 mm, a width of 100 mm, and a thickness of 4 mm. Then, from this plate, a test piece having a length of 60 mm, a width of 100 mm and a thickness of 4 mm, and a test piece having a length of 50 mm, a width of 25 mm and a thickness of 4 mm were cut out by a disk saw. Then, the edges were chamfered by #100 sandpaper, and fine burrs were removed by a utility knife, to provide the two large and small plates as test pieces.
The two test pieces were aged in an oven adjusted at 80°C ± 5°C for 300 hours, and cooled at 25°C for 24 hours, and then the large test piece and the small test piece were mounted in a stick-slip tester SSP-02 manufactured by ZINS Ziegler-Instruments GmbH, and rubbed against each other three times with a swing of 20 mm at a temperature of 23°C, a humidity of 50%RH, a load of 40 N, and a velocity of 10 mm/s. The index under the condition on which the noise risk was largest at this moment was taken as the measured value. The larger the noise risk is, the higher the risk of generation of squeaking sound is. A noise risk of 3 or less is good.

[Table 1]

Table 1

| Composition | | | | Amount of rubber (%) | Graft ratio (%) | Example 1 | Example 2 | Example 3 | Comparative Example 1 | Comparative Example 2 | Example 4 | Example 5 | Example 6 | Comparative Example 3 | Comparative Example 4 |
|---|---|---|---|---|---|---|---|---|---|---|---|---|---|---|---|
| Rubber-reinforced resins (A) | (A1) | Raw material [P] | P1 | 30 | 55 | 21 | 17 | 17 | 0 | 0 | 30 | 17 | 17 | 0 | 0 |
| | (A2) | Raw materials [Q] | Q1 | 22 | 47 | 24 | 24 | 24 | 24 | 24 | 20 | 20 | 20 | 20 | 20 |
| | (A3) | | Q2 | 60 | 40 | 0 | 4 | 0 | 12 | 12 | 0 | 13 | 8 | 13 | 8 |
| | Raw materials [R] | | R1 | - | - | 0 | 0 | 0 | 9 | 5 | 0 | 0 | 0 | 17 | 17 |
| | | | R2 | - | - | 55 | 55 | 59 | 55 | 59 | 0 | 0 | 0 | 0 | 0 |
| Polycarbonate resin | Raw material [S] | | S1 | - | - | 0 | 0 | 0 | 0 | 0 | 50 | 50 | 55 | 50 | 55 |
| Total (% by mass) | | | | | | 100 | 100 | 100 | 100 | 100 | 100 | 100 | 100 | 100 | 100 |
| Evaluation results | Bending modulus (MPa) | | | | | 2320 | 2300 | 2300 | 2400 | 2400 | 2140 | 2130 | 2200 | 2210 | 2210 |
| | Deflection temperature under load (°C) | | | | | 91 | 90 | 91 | 91 | 92 | 96 | 95 | 97 | 96 | 98 |
| | Rockwell hardness | | | | | 104 | 103 | 104 | 107 | 108 | 107 | 106 | 108 | 111 | 112 |
| | Tensile strength (MPa) | | | | | 46 | 45 | 47 | 47 | 47 | 51 | 51 | 51 | 52 | 52 |
| | Bending strength (MPa) | | | | | 72 | 70 | 71 | 75 | 74 | 76 | 75 | 77 | 77 | 77 |
| | Maximum value of measured sound pressure (PalN) | | | | | 0.7 | 1.2 | 2.7 | 4.3 | 4.5 | 0.5 | 0.9 | 2.6 | 3.5 | 3.6 |
| | Observed striking force (N) | | | | | 21 | 20 | 21 | 19 | 20 | 20 | 21 | 22 | 23 | 21 |
| | Frequency (Hz) giving maximum value of sound pressure | | | | | 7650 | 7700 | 18000 | 9100 | 19100 | 7900 | 7950 | 14500 | 9200 | 19200 |

EP 3 699 212 B1

| Composition | | Amount of rubber (%) | Graft ratio (%) | Example 1 | Example 2 | Example 3 | Comparative Example 1 | Comparative Example 2 | Example 4 | Example 5 | Example 6 | Comparative Example 3 | Comparative Example 4 |
|---|---|---|---|---|---|---|---|---|---|---|---|---|---|
| | Attenuation of hitting sound (seconds) | 0.003 | 0.004 | 0.002 | 0.008 | | 0.009 | 0.003 | 0.005 | 0.006 | | 0.01 | 0.01 |
| | Squeaking sound evaluation | 2 | 2 | 2 | 2 | | 2 | 2 | 2 | 2 | | 2 | 2 |

From Table 1, the following are found.

It was found that in Examples 1 to 6 in which the thermoplastic resin composition [X] of the present invention was used, the rigidity was high, and the maximum value of sound pressure in the frequency range of 20 to 20,000 Hz was 3.0 Pa/N or less, and in addition, the frequency giving the maximum value of sound pressure was also in the range of 20 to 9,000 Hz or 14,000 to 19,000 Hz, and further, the noise risk was low, and thus not only the rigidity but also the acoustic properties such as hitting sound and squeaking sound were excellent.

In contrast, in Comparative Examples 1 to 4 in which no hitting sound-reducing material was used, the rigidity was high, and the noise risk was low, but the maximum value of sound pressure in the frequency range of 20 to 20,000 Hz exceeded 3.0 Pa/N, and in addition, the frequency giving the maximum value of sound pressure also exceeded 9000 Hz or was outside the range of 14,000 to 19,000 Hz, the attenuation of hitting sound was also 0.008 seconds or more, and the generation of hitting sound was significant.

Industrial Applicability

The thermoplastic resin composition of the present invention can be preferably applied as a molding material that provides a molded article which is inhibited from generating hitting sound and is preferably highly rigid, and can be preferably used, for example, as a molding material for vehicle parts such as automobile interior parts.

**Claims**

1. A thermoplastic resin composition which comprises at least a rubber-reinforced resin (A) having a rubbery part (a1) and a resin part (a2),

    the rubbery part (a1) comprising a rubbery part (a1-1) derived from a block copolymer composed of a block (I) having a structural unit derived from an aromatic vinyl compound, and a block (II) having a structural unit derived from isoprene or isoprene and butadiene and having a main dispersion peak of tan $\delta$ at 0°C or more, or a hydrogenated product thereof, and further comprising a rubbery part (a1-2) derived from an ethylene-$\alpha$-olefin rubbery polymer,
    the resin part (a2) comprising a structural unit derived from an aromatic vinyl compound, and
    the thermoplastic resin composition having a maximum value of sound pressure of 3.0 Pa/N or less as measured in a frequency range of 20 to 20,000 Hz under the following measurement conditions that the measurement is performed based on a frequency spectrum of sound pressure obtained by striking a center of one surface of a test piece with a force of 20 $\pm$ 5 N using a stainless steel hammer, and collecting a sound generated at this moment by use of a sound pressure microphone placed at a distance of 12 cm from the above surface in a perpendicular direction, the test piece being an integrally molded article having a rectangular main body having a length of 120 mm, a width of 60 mm, and a thickness of 3 mm and provided at an upper end thereof with a trapezoidal protrusion having an upper base of 20 mm, a lower base of 40 mm, a height of 8 mm, and a thickness of 1.5 mm, and being suspended by two strings taped to the protrusion.

2. The thermoplastic composition according to claim 1, which has a frequency giving the maximum value of sound pressure in a range of 20 to 9,000 Hz or 14,000 to 19,000 Hz.

3. The thermoplastic resin composition according to claim 1 or 2, which has a noise risk of 3 or less as measured using a stick-slip tester SSP-02 manufactured by ZINS Ziegler-Instruments GmbH under the following measurement conditions that a test piece having a length of 60 mm, a width of 100 mm, and a thickness of 4 mm, and a test piece having a length of 50 mm, a width of 25 mm, and a thickness of 4 mm are provided, and then a surface of the former test piece is rubbed against a surface of the latter test piece three times with a swing of 20 mm at a temperature of 23°C, a humidity of 50%RH, a load of 40 N and a velocity of 10 mm/s.

4. The thermoplastic resin composition according to any one of claims 1 to 3, wherein the rubber-reinforced resin (A) comprises a rubber-reinforced aromatic vinyl resin (A1) having a rubbery part (a1-1) derived from the block copolymer or hydrogenated product thereof, and a resin part (a2) comprising a structural unit derived from an aromatic vinyl compound, and a rubber-reinforced aromatic vinyl resin (A2) having a rubbery part (a1-2) derived from an ethylene-$\alpha$-olefin rubbery polymer, and a resin part (a2) comprising a structural unit derived from an aromatic vinyl compound.

5. The thermoplastic resin composition according to claim 1, wherein the rubbery part (a1) further comprises a rubbery part (a1-3) derived from a diene rubbery polymer.

**6.** The thermoplastic resin composition according to claim 5, wherein the rubber-reinforced resin (A) comprises a rubber-reinforced aromatic vinyl resin (A1) having a rubbery part (a1-1) derived from the block copolymer or hydrogenated product thereof, and a resin part (a2) comprising a structural unit derived from an aromatic vinyl compound, a rubber-reinforced aromatic vinyl resin (A2) having a rubbery part (a1-2) derived from an ethylene-α-olefin rubbery polymer, and a resin part (a2) comprising a structural unit derived from an aromatic vinyl compound, and a rubber-reinforced aromatic vinyl resin (A3) having a rubbery part (a1-3) derived from a diene rubbery polymer, and a resin part (a2) comprising a structural unit derived from an aromatic vinyl compound.

**7.** The thermoplastic resin composition according to any one of claims 1 to 6, which rubber content is 5 to 60% by mass.

**8.** A molded article formed of the thermoplastic resin composition according to any one of claims 1 to 7.

**Patentansprüche**

**1.** Eine thermoplastische Harzzusammensetzung, die mindestens ein kautschukverstärktes Harz (A) mit einem kautschukartigen Teil (a1) und einem Harzteil (a2) umfasst,

wobei der kautschukartige Teil (a1) einen kautschukartigen Teil (a1-1) umfasst, der von einem Blockcopolymer abgeleitet ist, das aus einem Block (I) mit einer Struktureinheit, die von einer aromatischen Vinylverbindung abgeleitet ist, und einem Block (II) mit einer Struktureinheit, die von Isopren oder Isopren und Butadien abgeleitet ist, besteht und einen Hauptdispersionspeak von tanδ bei 0° C oder mehr aufweist, oder ein hydriertes Produkt davon, und ferner einen kautschukartigen Teil (a1-2) umfasst, der von einem Ethylen-α-Olefin-Kautschukpolymer abgeleitet ist,
der Harzteil (a2) eine Struktureinheit umfasst, die von einer aromatischen Vinylverbindung abgeleitet ist, und die thermoplastische Harzzusammensetzung hat einen maximalen Schalldruckwert von 3.0 Pa/N oder weniger, gemessen in einem Frequenzbereich von 20 bis 20.000 Hz unter den folgenden Messbedingungen, dass die Messung auf der Grundlage eines Frequenzspektrums des Schalldrucks durchgeführt wird, das durch Schlagen auf die Mitte einer Oberfläche eines Teststücks mit einer Kraft von 20± 5 N unter Verwendung eines rostfreien Stahlhammers erhalten wird, und Sammeln eines in diesem Moment erzeugten Schalls unter Verwendung eines Schalldruckmikrofons, das in einem Abstand von 12 cm von der oben genannten Oberfläche in einer senkrechten Richtung angeordnet ist, wobei der Prüfkörper ein einstückig geformter Gegenstand ist, der einen rechteckigen Hauptkörper mit einer Länge von 120 mm, einer Breite von 60 mm und einer Dicke von 3 mm aufweist und an seinem oberen Ende mit einem trapezförmigen Vorsprung versehen ist, der eine obere Basis von 20 mm, eine untere Basis von 40 mm, eine Höhe von 8 mm und eine Dicke von 1.5 mm aufweist und an zwei Schnüren aufgehängt ist, die an dem Vorsprung befestigt sind.

**2.** Die thermoplastische Zusammensetzung nach Anspruch 1, die eine Frequenz aufweist, die den Höchstwert des Schalldrucks in einem Bereich von 20 bis 9.000 Hz oder 14.000 bis 19.000 Hz ergibt.

**3.** Die thermoplastische Harzzusammensetzung nach Anspruch 1 oder 2, die ein Geräuschrisiko von 3 oder weniger aufweist, gemessen mit einem von ZINS Ziegler-Instruments GmbH hergestellten Stick-Slip-Tester SSP-02 unter den folgenden Messbedingungen, dass ein Teststück mit einer Länge von 60 mm, einer Breite von 100 mm und einer Dicke von 4 mm und ein Prüfkörper mit einer Länge von 50 mm, einer Breite von 25 mm und einer Dicke von 4 mm bereitgestellt werden und dann eine Oberfläche des ersteren Prüfkörpers gegen eine Oberfläche des letzteren Prüfkörpers dreimal mit einem Hub von 20 mm bei einer Temperatur von 23° C, einer Luftfeuchtigkeit von 50% RH, einer Last von 40 N und einer Geschwindigkeit von 10 mm/s gerieben wird.

**4.** Die thermoplastische Harzzusammensetzung nacheinem der Ansprüche 1 bis 3 , wobei das kautschukverstärkte Harz (A) ein kautschukverstärktes aromatisches Vinylharz (A1) mit einem kautschukartigen Teil (a1-1), der von dem Blockcopolymer oder einem hydrierten Produkt davon abgeleitet ist, umfasst, und einen Harzteil (a2), der eine von einer aromatischen Vinylverbindung abgeleitete Struktureinheit umfasst, und ein kautschukverstärktes aromatisches Vinylharz (A2) mit einem kautschukartigen Teil (a1-2), der von einem kautschukartigen Ethylen-α -Olefin-Polymer abgeleitet ist, und einem Harzteil (a2), der eine von einer aromatischen Vinylverbindung abgeleitete Struktureinheit umfasst.

**5.** Die thermoplastische Harzzusammensetzung nach Anspruch1, wobei der kautschukartige Teil (a1) ferner einen kautschukartigen Teil (a1-3) umfasst, der von einem kautschukartigen Dienpolymer abgeleitet ist.

**6.** Die thermoplastische Harzzusammensetzung nach Anspruchs , wobei das kautschukverstärkte Harz (A) ein kautschukverstärktes aromatisches Vinylharz (A1) mit einem kautschukartigen Teil (a1-1), der von dem Blockcopolymer oder einem hydrierten Produkt davon abgeleitet ist, und einem Harzteil (a2), der eine von einer aromatischen Vinylverbindung abgeleitete Struktureinheit umfasst, umfasst, ein kautschukverstärktes aromatisches Vinylharz (A2) mit einem kautschukartigen Teil (a1-2), der von einem kautschukartigen Ethylen-α -Olefin-Polymer abgeleitet ist, und einem Harzteil (a2), der eine von einer aromatischen Vinylverbindung abgeleitete Struktureinheit umfasst, und ein kautschukverstärktes aromatisches Vinylharz (A3) mit einem kautschukartigen Teil (a1-3), der von einem kautschukartigen Dien-Polymer abgeleitet ist, und einem Harzteil (a2), der eine von einer aromatischen Vinylverbindung abgeleitete Struktureinheit umfasst.

**7.** Die thermoplastische Harzzusammensetzung nach einem der Ansprüche 1bis 6, wobei der Kautschukgehalt 5 bis 60 Masseprozent beträgt.

**8.** Ein Formteil aus der thermoplastischen Harzzusammensetzung nach einem der Ansprüche 1 bis 7.


**Revendications**

**1.** Une composition de résine thermoplastique comprenant au moins une résine renforcée par du caoutchouc (A) ayant une partie caoutchouteuse (a1) et une partie résine (a2),

la partie caoutchouteuse (a1) comprenant une partie caoutchouteuse (a1-1) dérivée d'un copolymère séquencé composé d'un bloc (I) ayant une unité structurelle dérivée d'un composé vinylique aromatique et d'un bloc (II) ayant une unité structurelle dérivée de l'isoprène ou de l'isoprène et du butadiène et ayant un pic de dispersion principal de tan$\delta$ à 0° C ou plus, ou un produit hydrogéné de celui-ci, et comprenant en outre une partie caoutchouteuse (a1-2) dérivée d'un polymère caoutchouteux à base d'éthylène-α-oléfine,
la partie de résine (a2) comprenant une unité structurelle dérivée d'un composé vinylique aromatique, et
la composition de résine thermoplastique ayant une valeur maximale de pression acoustique de 3.0 Pa/N ou moins, mesurée dans une gamme de fréquences de 20 à 20 000 Hz dans les conditions de mesure suivantes :
la mesure est effectuée sur la base d'un spectre de fréquence de pression acoustique obtenu en frappant le centre d'une surface d'une pièce d'essai avec une force de 20± 5 N à l'aide d'un marteau en acier inoxydable, et en recueillant un son généré à ce moment-là à l'aide d'un microphone de pression acoustique placé à une distance de 12 cm de la surface susmentionnée dans une direction perpendiculaire, l'éprouvette est un article moulé intégralement ayant un corps principal rectangulaire d'une longueur de 120 mm, d'une largeur de 60 mm et d'une épaisseur de 3 mm et pourvu à son extrémité supérieure d'une saillie trapézoïdale ayant une base supérieure de 20 mm, une base inférieure de 40 mm, une hauteur de 8 mm et une épaisseur de 1,5 mm, et étant suspendu par deux marteaux en acier inoxydable.5 mm, et suspendue par deux cordes attachées à la protubérance.

**2.** La composition thermoplastique selon la revendication 1, dont la fréquence donnant la valeur maximale de la pression acoustique est comprise entre 20 et 9 000 Hz ou entre 14 000 et 19 000 Hz

**3.** La composition de résine thermoplastique selon la revendication 1 ou 2, qui présente risque de bruit de 3 ou moins, mesuré à l'aide d'un testeur de glissement SSP-02 fabriqué par ZINS Ziegler-Instruments GmbH dans les conditions de mesure suivantes : une éprouvette d'une longueur de 60 mm, d'une largeur de 100 mm et d'une épaisseur de 4 mm, et une éprouvette d'une longueur de 50 mm, d'une largeur de 25 mm et d'une épaisseur de 4 mm sont fournies, et une éprouvette d'une longueur de 50 mm, d'une largeur de 25 mm et d'une épaisseur de 4 mm sont fournies, puis une surface de la première éprouvette est frottée contre une surface de la seconde éprouvette trois fois avec une oscillation de 20 mm à une température de 23° C, une humidité de 50 % HR, une charge de 40 N et une vitesse de 10 mm/s.

**4.** La composition de résine thermoplastique selon l'une quelconque des revendications 1 à 3 , dans laquelle la résine renforcée au caoutchouc (A) comprend une résine vinylique aromatique renforcée au caoutchouc (A1) ayant une partie caoutchouteuse (a1-1) dérivée du copolymère à blocs ou de son produit hydrogéné, et une partie de résine (a2) comprenant une unité structurelle dérivée d'un composé vinylique aromatique, et une résine vinylique aromatique renforcée au caoutchouc (A2) ayant une partie caoutchouteuse (a1-2) dérivée d'un polymère caoutchouteux d'éthylène-a -oléfine, et une partie de résine (a2) comprenant une unité structurelle dérivée d'un composé vinylique aromatique.

5. La composition de résine thermoplastique selon la revendication1, dans laquelle la partie caoutchouteuse (a1) comprend en outre une partie caoutchouteuse (a1-3) dérivée d'un polymère diénique caoutchouteux.

6. La composition de résine thermoplastique selon la revendication 5 , dans laquelle la résine renforcée au caoutchouc (A) comprend une résine vinyle aromatique renforcée au caoutchouc (A1) ayant une partie caoutchouteuse (a1-1) dérivée du copolymère à blocs ou d'un produit hydrogéné de celui-ci, et une partie de résine(a2) comprenant une unité structurelle dérivée d'un composé vinylique aromatique, une résine vinylique aromatique renforcée par du caoutchouc (A2) ayant une partie caoutchouteuse (a1-2) dérivée d'un polymère caoutchouteux d'éthylène-a -oléfine, et une partie de résine(a2) comprenant une unité structurelle dérivée d'un composé vinylique aromatique, et une résine vinylique aromatique renforcée par du caoutchouc (A3) ayant une partie caoutchouteuse (a1-3) dérivée d'un polymère caoutchouteux de diène, et une partie de résine(a2) comprenant une unité structurelle dérivée d'un composé vinylique aromatique.

7. La composition de résine thermoplastique selon l'une des revendications 1 à 6, dont la teneur en caoutchouc est de 5 à 60 % en masse.

8. Une article moulé formé de la composition de résine thermoplastique selon l'une des revendications 1 à 7.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013112812 A
- JP 2001158841 A
- JP H345646 A
- JP H83249 A
- WO 2015146743 A
- JP H05331246 A
- JP 2002037974 A
- WO 2018030398 A
- WO 2016130631 A
- JP 2011174029 A
- JP 2011137066 A